# EUROPÄISCHE PATENTANMELDUNG

(11) **EP 1 739 148 A2**
(43) Veröffentlichungstag der Anmeldung: **03.01.2007**
(21) Anmeldenummer: 06115563.6
(22) Anmeldetag: 16.06.2006
(51) Int. Cl.: C09J 7/02

(54) **Klebebandschlauch**

(30) Priorität: 29.06.2005 DE 102005030749
(71) Anmelder: tesa AG, 20253 Hamburg (DE)
(72) Erfinder: Meier, Andreas, Dr., 22417 Hamburg (DE); Hebbel, Gerd, 22523 Hamburg (DE)

(57) **Zusammenfassung**

Klebebandschlauch aus einem Klebeband mit einem Trägermaterial, das eine zumindest partielle Klebebeschichtung aufweist, wobei das Klebeband in Richtung der Längsachse mit der Masseseite nach außen weisend zusammengerollt und die beiden Längskanten überlappend zusammengeklebt sind.

## Beschreibung

Die Erfindung bezieht sich auf einen Schlauch aus einem Klebeband zum Maskieren. Bevorzugt sind Anwendungen zum Maskieren von Oberflächen, welche behandelt, ausgerüstet, veredelt oder beschichtet werden sollen.

Beim Behandeln, Ausrüsten, Veredeln und Beschichten von Oberflächen werden häufig selbstklebende Abdeckbänder eingesetzt, um Bereiche, die nicht behandelt, ausgerüstet, veredelt oder beschichtet werden sollen, zu schützen. Nach dem Behandeln, Ausrüsten, Veredeln oder/und Beschichten können diese Bänder abgezogen werden. Vorteilhafte Materialien in den Bändern weisen eine gewisse Resistenz gegenüber dem abzuweisenden Produkt auf. Ferner sind sie auch inert gegenüber dem Substrat.

Insbesondere bei Abklebebändern für Maler- und Lackiererarbeiten sind rückstandsfrei abzulösende Selbstklebeprodukte bevorzugt. Eine Aufnahme oder zumindest gute Haftung der Lackprodukte an dem Abdeckband ist notwendig. Im Allgemeinen bestehen diese Produkte aus dünnen Papieren, Folien oder Filmen, welche durch entsprechende Ausrüstungsschritte den Anforderungen angepasst werden. Generell gibt es diese Produkte in verschiedenen Ausführungen. Nachteilig ist für diese Produkte in manchen Anwendungen die geringe Dicke. Insbesondere beim Spritzlackieren im Autoreparaturbereich sind Sicken und Spalten nur durch aufwendiges Mehrfachabkleben mit einem dünnen Produkt gegen den Sprühnebel abzudichten. Ferner sind derartig gestaltete Produkte wenig kompressibel. Eine andere Möglichkeit besteht darin, einen Schaum in den Bereich einzulegen. Ein Nachteil ist zudem, dass Schäume immer eine zellenförmige Struktur aufweisen. Schäume hoher Festigkeit sind somit weniger offen und können somit weniger Lack aufnehmen. Sehr offene Schäume haben eine gute Lackaufnahme, weisen sich jedoch durch geringe Festigkeit auf. Daher sind offene Schäume für starkklebende Anwendung ungeeignet. Des Weiteren sind Schäume vergleichsweise teuer.

EP 0 365 510 A1 offenbart ein längliches, kompressibles und biegbares Schaumpolster, das Flächenbehandlung widersteht, zum Abdecken von zu behandelnden Flächen.
EP 0 384 624 A1 offenbart ebenfalls einen Schaum, welcher nicht kalt verschweißt wurde und der gegebenenfalls mit einem Kleber ausgerüstet wurde.

Der vorliegenden Erfindung liegt die Aufgabe zugrunde, eine Lösung zur Verfügung zu stellen, die die besonders einfache, preiswerte und schnelle Maskierung bei Lackierprozessen ermöglicht, ohne dass die Nachteile des Standes der Technik auftreten oder zumindest nicht in dem bisherigen Umfang.

Gelöst wird diese Aufgabe durch einen Klebebandschlauch, wie er im Hauptanspruch niedergelegt ist. Gegenstand der Unteransprüche sind dabei vorteilhafte Weiterbildungen der Erfindung sowie eine Anwendung.

Demgemäß betrifft die Erfindung einen Klebebandschlauch aus einem Klebeband mit einem Trägermaterial, das eine zumindest partielle Klebebeschichtung aufweist, wobei das Klebeband in Richtung der Längsachse mit der Masseseite nach außen weisend zusammengerollt und die beiden Längskanten überlappend zusammengeklebt sind.

In einer ersten vorteilhaften Ausführungsform sind die beiden Längskanten des Klebebands derart überlappend zusammengeklebt, dass bezogen auf die Breite des Klebebands ein Bereich von 5 % bis 60 %, vorzugsweise 20 % überlappt.
Bevorzugt werden die Klebebandschläuche aus 50 mm breiten Klebebändern hergestellt.

In einer weiteren vorteilhaften Weiterbildung sind auf dem Klebeband des Klebebandschlauchs in Längsrichtung ein oder mehrere Streifen vorgesehen, die nicht mit Kleber beschichtet sind.

Weiter vorzugsweise ist die außen liegende Klebebeschichtung vollflächig aufgebracht.

In einer weiteren vorteilhaften Weiterbildung ist die Klebemasse des Klebebandschlauchs in Längsrichtung in Form von zumindest einem Streifen nichtklebend ausgerüstet.
Je nach Verwendungsfall können auch mehrere parallele Streifen des Klebers nichtklebend sein.

Dabei können der oder die nichtklebenden Streifen durch Inaktivierung der Klebemasse und/oder durch Eindecken mit einem Abdeckmaterial erzeugt sein.

Die Inaktivierung der Klebemasse kann durch alle dem Fachmann bekannten Methoden wie Bestrahlen, Besprühen, Bedrucken oder Bepudern erfolgen.

Weiter vorzugsweise machen der oder die nichtklebenden Streifen 5 % bis 90 % des Umfangs des Klebebandschlauchs aus, insbesondere 75 %.

Besonders vorteilhaft lassen sich die Klebebandschläuche im Lackierbereich (Inline Repair (OEM (Original Equipment Manufacturer)), Finish (OEM) und Reparaturwerkstätten (ART)) anwenden. Sie halten den Übergang von lackierten zu unlackierten Flächen diffus und machen den Übergang unsichtbar. Hierbei handelt es sich in erster Linie um teillackierte Teile.

In einigen OEM Lackierprozessen ist der Lackierung ein Reinigungsprozess mit Emu-Federn vorgelagert. Emu-Federn sorgen vor dem Lackieren dafür, dass auch die letzten Feinpartikel vom Untergrund (zumeist Metall) entfernt werden Damit die Emu-Federn nicht an der Oberfläche des Schlauches kleben bleiben, wird die Oberfläche mit einem nichtklebenden Material abgedeckt.

Ferner lässt sich ein in vorteilhafter Weise partiell abgedeckter Klebebandschlauch besser verarbeiten als ein über den ganzen Umfang klebender Schlauch.

Als Trägermaterial für das Klebeband können alle bekannten textilen Träger wie Gewebe, Gewirke oder Vliese verwendet werden, wobei unter "Vlies" zumindest textile Flächengebilde gemäß EN 29092 (1988) sowie Nähwirkvliese und ähnliche Systeme zu verstehen sind. Dabei müssen Eindeckung und Trägermaterial nicht zwangsläufig aus den gleichen Materialien bestehen.

Ebenfalls können Abstandsgewebe und -gewirke mit Kaschierung verwendet werden.
Derartige Abstandsgewebe werden in der EP 0 071 212 B1 offenbart. Abstandsgewebe sind mattenförmige Schichtkörper mit einer Deckschicht aus einem Faser- oder Filamentvlies, einer Unterlagsschicht und zwischen diesen Schichten vorhandene einzelne oder Büschel von Haltefasern, die über die Fläche des Schichtkörpers verteilt durch die Partikelschicht hindurchgenadelt sind und die Deckschicht und die Unterlagsschicht untereinander verbinden. Als zusätzliches, aber nicht erforderliches Merkmal sind gemäß EP 0 071 212 B1 in den Haltefasern Partikel aus inerten Gesteinspartikeln, wie zum Beispiel Sand, Kies oder dergleichen, vorhanden.
Die durch die Partikelschicht hindurchgenadelten Haltefasern halten die Deckschicht und die Unterlagsschicht in einem Abstand voneinander und sie sind mit der Deckschicht und der Unterlagsschicht verbunden.
Abstandsgewebe oder-gewirke sind u. a. in zwei Artikeln beschrieben, und zwar
einem Artikel aus der Fachzeitschrift "kettenwirk-praxis 3/93", 1993, Seiten 59 bis 63 "Raschelgewirkte Abstandsgewirke"
und
einem Artikel aus der Fachzeitschrift "kettenwirk-praxis 1/94", 1994, Seiten 73 bis 76 "Raschelgewirkte Abstandsgewirke"
auf deren Inhalt hiermit Bezug genommen wird und deren Inhalt Teil dieser Offenbarung und Erfindung wird.

Als Vliesstoffe kommen besonders verfestigte Stapelfaservliese, jedoch auch Filament-, Meltblown- sowie Spinnvliese in Frage, die meist zusätzlich zu verfestigen sind. Als mögliche Verfestigungsmethoden sind für Vliese die mechanische, die thermische sowie die chemische Verfestigung bekannt. Werden bei mechanischen Verfestigungen die Fasern meist durch Verwirbelung der Einzelfasern, durch Vermaschung von Faserbündeln oder durch Einnähen von zusätzlichen Fäden rein mechanisch zusammengehalten, so lassen sich durch thermische als auch durch chemische Verfahren adhäsive (mit Bindemittel) oder kohäsive (bindemittelfrei) Faser-Faser-Bindungen erzielen. Diese lassen sich bei geeigneter Rezeptierung und Prozessführung ausschließlich oder zumindest überwiegend auf Faserknotenpunkte beschränken, so dass unter Erhalt der lockeren, offenen Struktur im Vlies trotzdem ein stabiles, dreidimensionales Netzwerk gebildet wird.

Besonders vorteilhaft haben sich Vliese erwiesen, die insbesondere durch ein Übernähen mit separaten Fäden oder durch ein Vermaschen verfestigt sind.

Derartige verfestigte Vliese werden beispielsweise auf Nähwirkmaschinen des Typs "Malivlies" der Firma Karl Meyer, ehemals Malimo, hergestellt und sind unter anderem bei den Firmen Naue Fasertechnik und Techtex GmbH beziehbar. Ein Malivlies ist dadurch gekennzeichnet, dass ein Querfaservlies durch die Bildung von Maschen aus Fasern des Vlieses verfestigt wird.
Als Träger kann weiterhin ein Vlies vom Typ Kunitvlies oder Multiknitvlies verwendet werden. Ein Kunitvlies ist dadurch gekennzeichnet, dass es aus der Verarbeitung eines längsorientierten Faservlieses zu einem Flächengebilde hervorgeht, das auf einer Seite Maschen und auf der anderen Maschenstege oder Polfaser-Falten aufweist, aber weder Fäden noch vorgefertigte Flächengebilde besitzt. Auch ein derartiges Vlies wird beispielsweise auf Nähwirkmaschinen des Typs "Kunitvlies" der Firma Karl Mayer schon seit längerer Zeit hergestellt. Ein weiteres kennzeichnendes Merkmal dieses Vlieses besteht darin, dass es als Längsfaservlies in Längsrichtung hohe Zugkräfte aufnehmen kann. Ein Multiknitvlies ist gegenüber dem Kunitvlies dadurch gekennzeichnet, dass das Vlies durch das beidseitige Durchstechen mit Nadeln sowohl auf der Ober- als auch auf der Unterseite eine Verfestigung erfährt.
Schließlich sind auch Nähvliese als Vorprodukt geeignet, eine erfindungsgemäße Eindeckung und ein erfindungsgemäßes Klebeband zu bilden. Ein Nähvlies wird aus einem Vliesmaterial mit einer Vielzahl parallel zueinander verlaufender Nähte gebildet. Diese Nähte entstehen durch das Einnähen oder Nähwirken von durchgehenden textilen Fäden. Für diesen Typ Vlies sind Nähwirkmaschinen des Typs "Maliwatt" der Firma Karl Mayer, ehemals Malimo, bekannt.

Weiterhin besonders vorteilhaft ist ein Stapelfaservlies, das im ersten Schritt durch mechanische Bearbeitung vorverfestigt wird oder das ein Nassvlies ist, das hydrodynamisch gelegt wurde, wobei zwischen 2 % und 50 % der Fasern des Vlieses Schmelzfasern sind, insbesondere zwischen 5 % und 40 % der Fasern des Vlieses.
Ein derartiges Vlies ist dadurch gekennzeichnet, dass die Fasern nass gelegt werden oder zum Beispiel ein Stapelfaservlies durch die Bildung von Maschen aus Fasern des Vlieses oder durch Nadelung, Vernähung beziehungsweise Luft- und/oder Wasserstrahlbearbeitung vorverfestigt wird.

In einem zweiten Schritt erfolgt die Thermofixierung, wobei die Festigkeit des Vlieses durch das Auf- oder Anschmelzen der Schmelzfasern nochmals erhöht wird.

Für die erfindungsgemäße Nutzung von Vliesen ist besonders die adhäsive Verfestigung von mechanisch vorverfestigten oder nassgelegten Vliesen von Interesse, wobei diese über Zugabe von Bindemittel in fester, flüssiger, geschäumter oder pastöser Form erfolgen kann. Prinzipielle Darreichungsformen sind vielfältig möglich, zum Beispiel feste Bindemittel als Pulver zum Einrieseln, als Folie oder als Gitternetz oder in Form von Bindefasern. Flüssige Bindemittel sind gelöst in Wasser oder organischen Lösemitteln oder als Dispersion applizierbar. Überwiegend werden zur adhäsiven Verfestigung Bindedispersionen gewählt: Duroplasten in Form von Phenol- oder Melaminharzdispersionen, Elastomere als Dispersionen natürlicher oder synthetischer Kautschuke oder meist Dispersionen von Thermoplasten wie Acrylate, Vinylacetate, Polyurethane, Styrol-Butadien-Systeme, PVC u.ä. sowie deren Copolymere. Im Normalfall handelt es sich dabei um anionische oder nicht-ionogen stabilisierte Dispersionen, in besonderen Fällen können aber auch kationische Dispersionen von Vorteil sein.

Die Art des Bindemittelauftrages kann gemäß dem Stand der Technik erfolgen und ist beispielsweise in Standardwerken der Beschichtung oder der Vliestechnik wie "Vliesstoffe" (Georg Thieme Verlag, Stuttgart, 1982) oder "Textiltechnik-Vliesstofferzeugung" (Arbeitgeberkreis Gesamttextil, Eschborn, 1996) nachzulesen.

Für mechanisch vorverfestigte Vliese, die bereits eine ausreichende Verbundfestigkeit aufweisen, bietet sich der einseitige Sprühauftrag eines Bindemittels an, um Oberflächeneigenschaften gezielt zu verändern.
Neben dem sparsamen Umgang mit dem Bindemittel wird bei derartiger Arbeitsweise auch der Energiebedarf zur Trocknung deutlich reduziert. Da keine Abquetschwalzen benötigt werden und die Dispersionen vorwiegend in dem oberen Bereich des Vliesstoffes verbleiben, kann eine unerwünschte Verhärtung und Versteifung des Vlieses weitgehend verhindert werden.
Für eine ausreichende adhäsive Verfestigung des Vliesträgers ist im allgemeinen Bindemittel in der Größenordnung von 1 % bis 50 %, insbesondere 3 % bis 20 %, bezogen auf das Gewicht des Faservlieses, zuzugeben.

Die Zugabe des Bindemittels kann bereits bei der Vliesherstellung, bei der mechanischen Vorverfestigung oder aber in einem gesonderten Prozessschritt erfolgen, wobei dieser inline oder off-line durchgeführt werden kann. Nach der Bindemittelzugabe muss temporär für das Bindemittel ein Zustand erzeugt werden, in dem dieses klebend wird und adhäsiv die Fasern verbindet - dies kann während der Trocknung zum Beispiel von Dispersionen, aber auch durch Erwärmung erreicht werden, wobei über flächige oder partielle Druckanwendung weitere Variationsmöglichkeiten gegeben sind. Die Aktivierung des Bindemittels kann in bekannten Trockenkanälen, bei geeigneter Bindemittelauswahl aber auch mittels Infrarotstrahlung, UV-Strahlung, Ultraschall, Hochfrequenzstrahlung oder dergleichen erfolgen. Für die spätere Endanwendung ist es sinnvoll, aber nicht zwingend notwendig, dass das Bindemittel nach Ende des Vlies-Herstellprozesses seine Klebrigkeit verloren hat. Vorteilhaft ist, dass durch thermische Behandlung flüchtige Komponenten wie Faserhilfsstoffe entfernt werden und somit ein Vlies mit günstigen Foggingwerten entsteht, so dass bei Einsatz einer foggingarmen Klebemasse ein Klebeband mit besonders günstigen Foggingwerten produziert werden kann.

Eine weitere Sonderform der adhäsiven Verfestigung besteht darin, dass die Aktivierung des Bindemittels durch Anlösen oder Anquellen erfolgt. Prinzipiell können hierbei auch die Fasern selbst oder zugemischte Spezialfasern die Funktion des Bindemittels übernehmen. Da für die meisten polymeren Fasern derartige Lösemittel jedoch aus Umweltgesichtspunkten bedenklich beziehungsweise problematisch in ihrer Handhabung sind, wird dieses Verfahren eher selten angewandt.

Als Ausgangsmaterialien für den textilen Träger sind insbesondere Polyester-, Polypropylen-, Viskose- oder Baumwollfasern vorgesehen. Die vorliegende Erfindung ist aber nicht auf die genannten Materialien beschränkt, sondern es können, für den Fachmann erkenntlich ohne erfinderisch tätig werden zu müssen, eine Vielzahl weiterer Fasern zur Herstellung des Vlieses eingesetzt werden.

Als Trägermaterial eignen sich auch (Krepp-)Papiere, Laminate, Folien (zum Beispiel PP, PE, PET, PA, PU), Schaumstoffe oder geschäumte Folien.

Geeignete Träger weisen vorzugsweise ein Flächengewicht von 30 bis 500 g/m² auf, wobei weiter bevorzugt solche mit einer Flächenmasse von 150 bis 300 g/m² sind.

Für die Herstellung der Klebebänder kann auf alle bekannten Klebemassensysteme zurückgegriffen werden. Neben Natur- oder Synthesekautschuk basierten Klebemassen sind auch Silikonklebemassen sowie insbesondere Polyacrylatklebemassen verwendbar. Wegen ihrer besonderen Eignung als Klebemasse in Hinblick auf die Foggingfreiheit sind lösungsmittelfreie Acrylat-Hotmeltmassen zu bevorzugen, wie sie in DE 198 07 752 A1 sowie in DE 100 11 788 A1 näher beschrieben sind. Die Auftragsgewichte bei der Klebemassenbeschichtung sind den jeweiligen Trägern im Hinblick auf die Rauhigkeit sowie Saugfähigkeit der zu beschichtenden Oberfläche anzupassen und bewegen sich im Bereich zwischen 20 bis 100 g/m² für glatte, nicht-saugende Schichten oder aber bis 300 g/m² für offene, strukturierte Schichten, wobei 50 bis 150 g/m² als ausreichend anzusehen sind. Als Beschichtungstechnologie kommen bekannte Systeme zum Zuge, wobei sich für offene, saugfähige Textilien Verfahren anbieten, die ein druckloses Auflegen von hochviskosen Klebemassen zulassen, beispielsweise die Beschichtung von Hotmelt-Klebemassen über Düsenbeschichtung oder über Transferierung von einem anti-adhäsiven Trägertuch oder Releaseliner auf den Trägerverbund.

Eine Schwerentflammbarkeit der Klebebänder lässt sich erzielen, indem dem Träger und/oder der Klebemasse Flammschutzmittel zugesetzt werden. Diese können bromorganische Verbindungen sein, bei Bedarf mit Synergisten wie Antimontrioxid, wobei jedoch in Hinblick auf die Halogenfreiheit des Klebebandes roter Phosphor, phosphororganische, mineralische oder intumeszierende Verbindungen wie Ammoniumpolyphosphat allein oder in Verbindung mit Synergisten bevorzugt Verwendung finden.

Als Abdeckmaterialien eignen sich auch alle oben ausführlich aufgeführten Materialien. Bevorzugt wird aber ein nicht-fusselndes Material eingesetzt wie eine Kunststofffolie oder ein gut verleimtes, langfaseriges Papier.

Die Vorteile des Klebebandschlauchs gegenüber Schäumen sind darin zu sehen, dass die Maskierung vor dem Ofendurchgang nicht abgezogen werden braucht, da Kreppklebebänder für den Ofendurchgang entwickelt worden sind. Die Klebebandschläuche lassen sich auch nach Ofendurchgang einfach und rückstandsfrei entfernen. Schäume hingegen müssen vor dem Ofendurchgang abgezogen werden.

Klebebandschläuche weisen eine wesentlich geringere Dehnung auf und sind in Abrollrichtung unflexibel. Damit lassen sich lange und gerade Kanten (zum Beispiel im Dachbereich) wesentlich leichter bekleben als mit hochflexiblen Schäumen.

Im Folgenden soll die Erfindung anhand einer Figur näher erläutert werden, ohne damit die Erfindung unnötig einschränken zu wollen.

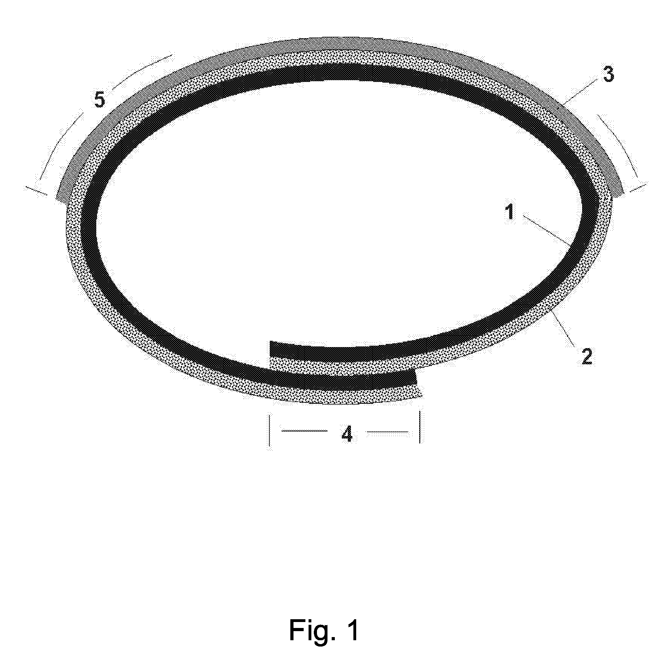

Es zeigt
- Figur 1: einen erfindungsgemäßen Klebebandschlauch.

Zentrale Elemente des Klebebandschlauches gemäß Figur 1 sind die Klebmasse des Klebebandes (2) sowie das Trägermaterial des Klebebandes (1). Das Klebeband ist in Richtung der Längsachse mit der Masseseite (2) nach außen weisend zusammengerollt, und die beiden Längskanten des Klebebands sind überlappend zusammengeklebt, so dass sich ein Überlappungsbereich (4) ergibt.
Zusätzlich ist auf die Klebemasse (2) des Klebebandes ein Abdeckmaterial (3) kaschiert. In diesem Fall beträgt die Breite des abgedeckten Bereichs (5) annähernd 50 % des äußeren Umfangs des Klebebandschlauchs.

## Patentansprüche

1. Klebebandschlauch aus einem Klebeband mit einem Trägermaterial, das eine zumindest partielle Klebebeschichtung aufweist, wobei das Klebeband in Richtung der Längsachse mit der Masseseite nach außen weisend zusammengerollt und die beiden Längskanten überlappend zusammengeklebt sind.

2. Klebebandschlauch nach Anspruch 1, **dadurch gekennzeichnet, dass** die beiden Längskanten des Klebebands derart überlappend zusammengeklebt sind, dass bezogen auf die Breite des Klebebands ein Bereich von 5 % bis 60 %, vorzugsweise 20 % überlappt.

3. Klebebandschlauch nach Anspruch 1 oder 2, **dadurch gekennzeichnet, dass** auf dem Klebeband des Klebebandschlauchs in Längsrichtung ein oder mehrere Streifen vorgesehen sind, die nicht mit Kleber beschichtet sind

4. Klebebandschlauch nach Anspruch 1 oder 2, **dadurch gekennzeichnet, dass** die außen liegende Klebebeschichtung vollflächig aufgebracht ist.

5. Klebebandschlauch nach zumindest einem der Ansprüche 1 bis 4, **dadurch gekennzeichnet, dass** die Klebemasse des Klebebandschlauchs in Längsrichtung in Form von zumindest einem Streifen nichtklebend ausgerüstet ist.

6. Klebebandschlauch nach Anspruch 5, **dadurch gekennzeichnet, dass** der oder die nichtklebenden Streifen durch Inaktivierung der Klebemasse und/oder durch Eindecken mit einem Abdeckmaterial erzeugt sind.

7. Klebebandschlauch nach Anspruch 5, **dadurch gekennzeichnet, dass** der oder die nichtklebenden Streifen 5 % bis 90 % des Umfangs des Klebebandschlauchs ausmachen, insbesondere 75 %.

8. Klebebandschlauch nach Anspruch 5, **dadurch gekennzeichnet, dass** als Abdeckung nicht-fusselndes Material wie Kunststofffolien oder gut verleimtes langfaseriges Papier eingesetzt werden.

9. Verwendung eines Klebebandschlauchs nach zumindest einem der vorherigen Ansprüche zum Maskieren des Untergrunds während eines Lackierprozesses.
